# FASCICULE DE BREVET EUROPEEN

(11) **EP 3 510 304 B1**
(45) Date de publication et mention de la délivrance du brevet: **02.09.2020**
(21) Numéro de dépôt: 17780786.4
(22) Date de dépôt: 04.09.2017
(51) Int. Cl.: F16H 61/28, B60W 10/04, B60W 10/113, B60W 30/19, F16H 61/688, F16H 63/50

(54) **PROCÉDÉ DE CALCUL DE POSITIONS POUR LA SYNCHRONISATION D'UNE BOITE DE VITESSES A DOUBLE EMBRAYAGE**
VERFAHREN ZUR BERECHNUNG VON POSITIONEN ZUM SYNCHRONISIEREN EINES DOPPELKUPPLUNGSGETRIEBES
METHOD FOR CALCULATING POSITIONS TO SYNCHRONISE A DUAL CLUTCH GEARBOX

(30) Priorité: 09.09.2016 FR 1658419; 09.09.2016 FR 1658417; 09.09.2016 FR 1658418
(43) Date de publication de la demande: 17.07.2019
(73) Titulaire: PSA Automobiles SA, 78300 Poissy (FR)
(72) Inventeur: SCHAEFFER, Eric, 75013 Paris (FR); DESCHAMPS, Alexandre, 78530 Buc (FR)
(86) Numéro de dépôt international: PCT/FR2017/052335
(87) Numéro de publication internationale: WO 2018/046827

(56) Documents cités:
- EP-A1- 1 467 127
- EP-A1- 1 887 258
- DE-A1- 19 953 937
- DE-A1-102008 043 385
- FR-A1- 2 979 405
- US-A1- 2007 208 480

## Description

La présente invention concerne un procédé de calcul des positions de points particuliers de manchons de synchronisation d'une boîte de vitesses à double embrayage, ainsi qu'un véhicule automobile comportant des moyens mettant en oeuvre un tel procédé de calcul. Un tel procédé est connu par exemple du document FR-2979405.

Les boîtes de vitesses à double embrayage comportent deux arbres d'entrée concentriques reliés chacun au moteur thermique par un embrayage. Chaque arbre d'entrée est relié à l'arbre de sortie par un ensemble de rapports de vitesse paire ou impaire, qui constitue une demi-boîte.

Pendant le roulage sur un rapport de vitesse avec son embrayage d'entrée fermé transmettant le couple du moteur, on peut préparer l'engagement d'un rapport de vitesse suivant supérieur ou inférieur, commandé par l'autre embrayage, en laissant cet embrayage ouvert, et en engageant le rapport suivant par le déplacement d'un manchon de synchronisation.

Le manchon de synchronisation réalise d'abord une synchronisation de la vitesse de l'arbre d'entrée en fonction de la vitesse du véhicule, puis un engagement du rapport suivant. On réalise ensuite une bascule progressive du couple moteur du premier sur le deuxième embrayage, pour obtenir le changement de rapport en maintenant une transmission du couple moteur aux roues motrices.

Le manchon de synchronisation peut être commandé par des actionneurs électriques ou hydrauliques, comportant une commande indépendante pour chaque manchon, ou une commande regroupée pour plusieurs manchons avec par exemple un barillet rotatif comprenant un profil de came.

Un procédé connu de contrôle d'un manchon de synchronisation d'une boîte de vitesses, en particulier à double embrayage, présenté notamment par le document FR-B1-2987331, comporte une première étape de régulation en vitesse du déplacement de l'actionneur pour arriver en début de phase de synchronisation, une deuxième étape de régulation en effort de cet actionneur pendant la phase de synchronisation, puis une troisième étape de régulation en vitesse pendant la phase d'engagement du rapport. Ce procédé présente de plus des caractéristiques pour générer la consigne d'effort de la deuxième phase, et pour élaborer une commande de l'actionneur permettant d'atteindre cette consigne.

D'une manière générale, le calculateur de commande de la boîte de vitesses possède en mémoire les positions de points particuliers des manchons de synchronisation situés entre les étapes, et permettant de mettre en œuvre ces étapes, qui sont connues après des périodes d'apprentissage automatique.

Toutefois lors du roulage du véhicule avec le moteur appliquant un couple sur un rapport d'une demi-boîte, les efforts transmis par les pignons du rapport engagé entraînent des déplacements des jeux axiaux, ainsi que des contraintes et des déformations sur les arbres et les carters de la boîte de vitesses. En particulier avec les dentures hélicoïdales des pignons, on obtient une poussée axiale sur les arbres qui provoquent un décalage des dispositifs de synchronisation portés par ces arbres.

On peut obtenir alors en fonction de différentes conditions de roulage comprenant notamment le couple transmis par la demi-boîte sous couple, des déformations entraînant des variations des positions des points particuliers des dispositifs de synchronisation de l'autre demi-boîte, qui génèrent des imprécisions dans la commande des manchons de synchronisation. On obtient un confort dégradé, et des risques d'usure.

La présente invention a notamment pour but d'éviter ces inconvénients de la technique antérieure.

Elle propose à cet effet un procédé de calcul des positions de points particuliers de manchons de synchronisation d'une boîte de vitesses à double embrayage entraînée par un moteur d'un véhicule, cette boîte comportant deux demi-boîtes commandées chacune par un embrayage, ce procédé étant remarquable en ce que, dans une phase de préparation pour chaque rapport de vitesse engagé d'une demi-boîte, le procédé applique une courbe de consigne de couple moteur prédéterminée et engage, pendant cette consigne, des rapports de l'autre demi-boîte, en mesurant et en mémorisant des positions de points particuliers des manchons de synchronisation pendant ces engagements, et en ce que par la suite, lors des phases de roulage du véhicule, le procédé calcule pour les points particuliers des positions prévisionnelles par comparaison avec les positions mémorisées des points particuliers pendant des conditions de roulage similaires.

Un avantage de ce procédé de calcul est que l'étape de préparation réalisée sur chaque boîte de vitesses, donne pour différentes valeurs de consigne de couple moteur, des valeurs réelles des positions des points particuliers qui prennent en compte notamment les jeux et les flexibilités de cette boîte.

Ensuite lors du roulage en reprenant pour un rapport engagé et un rapport à engager identiques, les points particuliers mesurés pour des couples proches de celui délivré par le moteur, on calcule avec une bonne précision les positions prévisionnelles de ces points qui vont faciliter un travail rapide et en douceur des actionneurs d'engagement des rapports.

On obtient un meilleur agrément du passage des rapports en évitant des bruits, ainsi qu'une réduction des usures.

Le procédé de calcul suivant l'invention peut de plus comporter une ou plusieurs des caractéristiques suivantes, qui peuvent être combinées entre elles :
avantageusement, le procédé engage tous les rapports de l'autre demi-boîte pour effectuer les mesures des positions des points particuliers.

Avantageusement, les points particuliers comportent un premier point correspondant à la position du manchon en début de synchronisation, un deuxième point correspondant à la position du manchon en fin de synchronisation, et un troisième point correspondant à la position du manchon en fin d'engagement du rapport.

En particulier, dans la phase de préparation, le procédé applique aussi pendant la consigne, des conditions de vitesse d'entraînement de la boîte de vitesses, et des conditions de température.

Avantageusement, la courbe de consigne de couple moteur prédéterminée pour chaque rapport engagé comporte plusieurs niveaux de valeurs échelonnés.

Avantageusement, les niveaux de valeurs sont au nombre d'au moins quatre allant jusqu'au couple maximum admissible par la boîte de vitesses.

Selon un mode de réalisation de l'invention, la courbe de consigne de couple moteur prédéterminée comprend différents paliers de couples fixes.

Un avantage de ce procédé de calcul est que l'étape de préparation réalisée sur chaque boîte de vitesses, donne pour différents paliers de couples fixes, des valeurs réelles des positions des points particuliers qui prennent en compte notamment les jeux et les flexibilités de cette boîte.

Selon une variante de l'invention, les paliers sont reliés entre eux par des pentes de couple toujours croissantes.

Selon cette variante, à la suite de l'étape d'engagement, lors des phases de roulage du véhicule, s'il détecte une demande de couple croissante, il calcule pour les points particuliers les positions prévisionnelles par comparaison avec les positions mémorisées des points particuliers.

Un avantage de cette variante de calcul est que l'étape de préparation réalisée sur chaque boîte de vitesses, donne pour différents paliers de couples fixes au cours d'une croissance continue du couple formée par les pentes entre les paliers, des valeurs réelles des positions des points particuliers qui prennent en compte notamment les jeux et les flexibilités de cette boîte lors d'une augmentation de couple.

Ensuite lors du roulage avec une accélération du véhicule correspondant à une croissance continue du couple, en reprenant pour un rapport engagé et un rapport à engager identiques, les points particuliers mesurés pour des couples proches de celui délivré par le moteur, on calcule avec une bonne précision les positions prévisionnelles de ces points qui vont faciliter un travail rapide et en douceur des actionneurs d'engagement des rapports.

Les pentes croissantes entre les paliers pendant la phase de préparation permettent de mettre la boîte de vitesses dans un état le plus proche de celui rencontré lors d'une accélération du véhicule, ce qui améliore encore la précision des résultats.

Selon un mode de réalisation de l'invention, une étape de synchronisation de chaque engagement comprend des variations de la consigne de couple moteur avec un effort de synchronisation piloté pour rester constant.

Avantageusement, avant le premier point particulier et après le deuxième point particulier, la courbe de consigne de couple moteur est croissante.

Avantageusement, entre le premier point particulier et le deuxième point particulier, la courbe de consigne de couple moteur est sinusoïdale.

Selon une variante, pour un même engagement, la courbe de consigne de couple moteur comportant les variations est répétée avec des variations de consigne autour des niveaux de valeurs échelonnés.

L'invention a aussi pour objet un véhicule automobile équipé d'une boîte de vitesses à double embrayage comprenant des manchons de synchronisation, qui comporte des moyens mettant en œuvre un procédé de calcul des positions de points particuliers de ces manchons comprenant l'une quelconque des caractéristiques précédentes.

L'invention sera mieux comprise, et d'autres buts, caractéristiques, détails et avantages de celle-ci apparaîtront plus clairement dans la description explicative qui va suivre, faite en référence aux dessins annexés donnés uniquement à titre d'exemple illustrant des modes de réalisation de l'invention, et dans lesquels :
- la figure 1 est un schéma d'une boîte de vitesses à double embrayage mettant en œuvre un procédé de contrôle selon l'invention ;
- les figures 2, 3 et 4 sont respectivement un schéma en coupe axiale, un schéma de dessus et un schéma en demi-coupe axiale avec la fourchette d'un dispositif de synchronisation de cette boîte de vitesses ;
- la figure 5 est un graphique présentant en fonction du temps différentes caractéristiques de fonctionnement de la boîte de vitesses pendant l'engagement d'un rapport selon un mode de réalisation de l'invention ;
- la figure 6 est un schéma présentant une courbe de consigne de couple moteur pour le procédé selon un mode de réalisation de l'invention ;
- la figure 7 est un schéma fonctionnel présentant un mode de réalisation selon l'invention ;
- la figure 8 est un graphique présentant en fonction du temps différentes caractéristiques de fonctionnement de la boîte de vitesses pendant l'engagement d'un rapport selon un mode de réalisation de l'invention ; et
- la figure 9 est un schéma fonctionnel présentant un mode de réalisation selon l'invention.

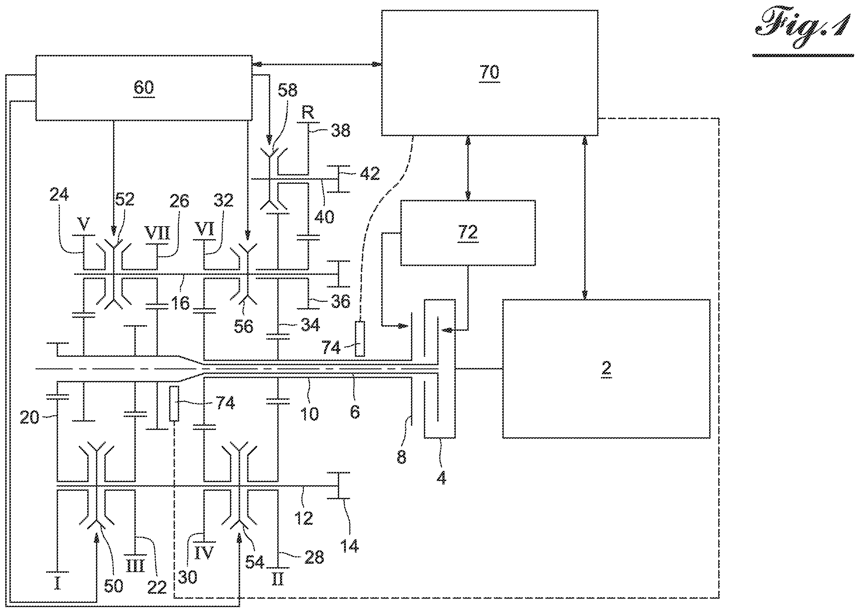

La figure 1 présente un groupe motopropulseur comportant un moteur thermique 2 entraînant une boîte de vitesses à double embrayage comprenant un premier embrayage d'entrée 4 entraînant un premier arbre primaire 6, et un deuxième embrayage d'entrée 8 entraînant un deuxième arbre primaire 10 qui est creux, recevant à l'intérieur ce premier arbre primaire.

La boîte de vitesses comporte un premier arbre secondaire 12 comportant un pignon de sortie 14, un deuxième arbre secondaire 16 comportant un pignon de sortie 18, et un troisième arbre secondaire 40 comportant un pignon de sortie 42. Les différents pignons de sortie 14, 18, 42 sont engagés sur une couronne d'un différentiel non représenté, répartissant le mouvement vers les roues motrices.

Pour former la première demi-boîte comprenant les rapports impairs, le premier arbre secondaire 12 reçoit le mouvement du premier arbre primaire 6 par un premier couple de pignon 20 pour former le premier rapport de vitesse I, et par un troisième couple de pignon 22 pour former le troisième rapport de vitesse III. Le deuxième arbre secondaire 16 reçoit le mouvement du premier arbre primaire 6 par un cinquième couple de pignon 24 pour former le cinquième rapport de vitesse V, et par un septième couple de pignon 26 pour former le septième rapport de vitesse VII.

Un premier manchon de synchronisation 50 disposé sur le premier arbre secondaire 12 entre le premier 20 et le troisième couple de pignon 22, engage alternativement le premier I ou le troisième rapport III. Un deuxième manchon de synchronisation 52 disposé sur le deuxième arbre secondaire 16 entre le cinquième 24 et le septième couple de pignon 26, engage alternativement le cinquième V ou le septième rapport VII.

Pour former la deuxième demi-boîte comprenant les rapports pairs, le premier arbre secondaire 12 reçoit le mouvement du deuxième arbre primaire 10 par un deuxième couple de pignon 28 pour former le deuxième rapport de vitesse II, et par un quatrième couple de pignon 30 pour former le quatrième rapport de vitesse IV. Le deuxième arbre secondaire 16 reçoit le mouvement du deuxième arbre primaire 10 par un septième couple de pignon 32, comportant un pignon commun avec le sixième couple de pignon 30, pour former le septième rapport de vitesse VII.

Un troisième manchon de synchronisation 54 disposé sur le premier arbre secondaire 12 entre le deuxième 28 et le quatrième couple de pignon 30, engage alternativement le deuxième II ou le quatrième rapport IV. Un quatrième manchon de synchronisation 56 disposé sur le deuxième arbre secondaire 16 à droite du septième couple de pignon 32, engage le septième rapport VII.

Le deuxième arbre secondaire 16 comporte un pignon libre 34 engagé avec le premier pignon du deuxième couple de pignon 28, qui est lié à un deuxième pignon libre 36 engagé sur un pignon 38 porté par le troisième arbre secondaire 40. Un cinquième manchon de synchronisation 58 disposé sur le troisième arbre secondaire 40, permet de lier le pignon 38 avec cet arbre pour engager le rapport de marché arrière R.

On obtient la possibilité de rouler sur la première demi-boîte avec les rapports impairs comportant le premier embrayage 4 fermé transmettant le couple moteur, et simultanément d'engager un des rapports pairs pour monter ou descendre un rapport, ou éventuellement trois rapports d'un coup. De la même manière en roulant sur la deuxième demi-boîte avec les rapports pairs comportant le deuxième embrayage 8 fermé, on peut engager simultanément un des rapports impairs.

Un calculateur électronique de contrôle de la transmission 70 recevant des informations de capteurs de vitesse 74 disposés sur chaque arbre primaire 6, 10, et échangeant des informations avec le moteur thermique 2, échange des informations avec un actionneur de synchroniseurs 60 permettant d'actionner individuellement chacun des manchons de synchronisation 50, 52, 54, 56, 58, et avec un actionneur d'embrayage 72 permettant d'actionner individuellement chaque embrayage 4, 8.

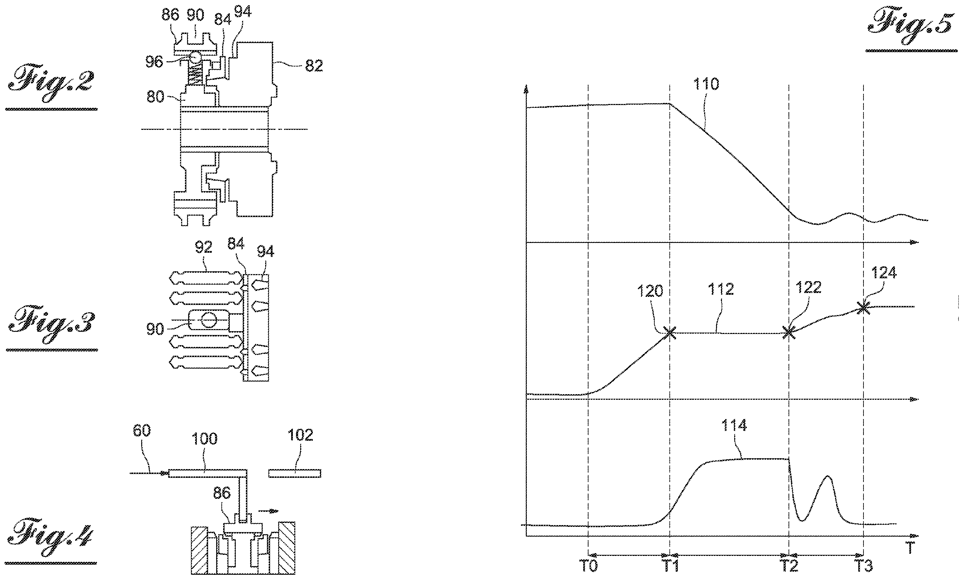

Les figures 2 et 3 présentent un dispositif de synchronisation comportant un moyeu 80 lié par des cannelures intérieures à un arbre secondaire le traversant, et à côté un pignon 82 d'un des rapports de vitesse qui est monté libre sur cet arbre.

Le pignon libre 82 supporte un cône de synchronisation 84, qui est poussé axialement vers la droite par le déplacement d'un manchon de synchronisation 86 recevant dans une rainure circulaire transversale 90 une fourchette de commande non représentée. Un système de billes poussées par des ressorts 96 maintient la position centrale neutre du manchon de synchronisation 86.

Le pignon libre 82 comporte après le cône de synchronisation 84, des dents d'engagement 94 qui lui sont liés.

La figure 4 présente une fourchette de commande 100 déplacée par l'actionneur de synchroniseurs 60, qui est engagée dans la rainure 90 du manchon de synchronisation 86 pour le déplacer axialement. Un capteur de position 102 relié au calculateur de contrôle de la transmission 70, mesure la position axiale de la fourchette 100 pour permettre sa commande.

La figure 5 présente en fonction du temps T lors de l'engagement d'un rapport, des courbes représentant la vitesse 110 de l'arbre primaire, la position 112 de la fourchette 100, et l'effort 114 appliqué par l'actionneur 60 sur cette fourchette.

Au temps T0 on réalise une avance de la fourchette 100. Le manchon de synchronisation 86 comporte des dents axiales intérieures 92 présentant à chaque extrémité une pointe qui va pousser sur une dent du cône de synchronisation 84, pour appliquer son cône sur un cône correspondant du pignon libre 82. Le déplacement qui est contrôlé en vitesse, s'arrête au temps T1 à la position du premier point particulier 120 mesurée par le capteur 102.

On réalise ensuite un contrôle de l'actionneur 60 en effort pour appliquer une pression ajustée sur les cônes de synchronisation, qui va réaliser un essorage de l'huile recouvrant ces cônes, puis un freinage de la vitesse du pignon libre 82 par friction sur ces cônes.

Au temps T2 la vitesse du pignon libre 82 est synchronisée avec celle de son arbre secondaire. On obtient la position du deuxième point particulier 122 mesurée par le capteur 102, qui est assez proche de celle du premier point particulier 120.

Le cône de synchronisation 84 ne reçoit alors plus de couple d'entraînement qui s'oppose à l'avance des pointes avant des dents intérieures 92 du manchon de synchronisation 86. Ce cône 84 peut tourner en dégageant ses dents entre les dents intérieures 92 du manchon de synchronisation 86, ce qui permet l'avance de ce manchon.

Après le temps T2 on a une avance du manchon de synchronisation 86 contrôlée en vitesse, puis l'engagement rapide sur les dents d'engagement 94 qui lie complètement le pignon 82 avec son arbre, se terminant à la position du troisième point particulier 124 mesurée par le capteur 102.

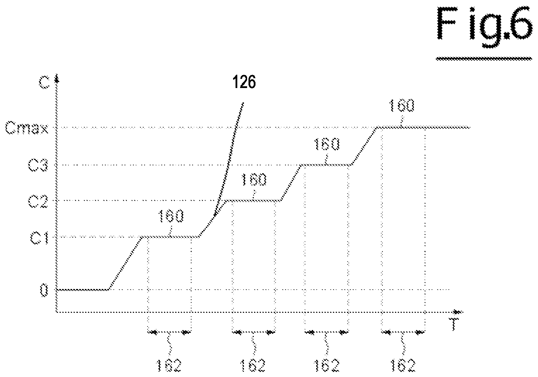

La figure 6 présente en fonction du temps T une courbe de consigne de couple moteur 126 appliquée pendant une phase de préparation, en particulier sur un banc de contrôle du véhicule en fin de chaîne d'assemblage, avec un rapport d'une demi-boîte engagée.

La courbe de consigne de couple 126 comporte à partir d'un couple nul, une succession de paliers d'étalonnage 160 de couples fixes C1, C2, C3 toujours plus élevés, se terminant par le couple maximum Cmax, reliés par des pentes continûment croissantes.

A l'intérieur de chaque palier 160 de couple fixe on réalise pendant un temps 162 l'engagement de tous les rapports de l'autre demi-boîte, en mesurant et en mémorisant les positions des points particuliers 120, 122, 124.

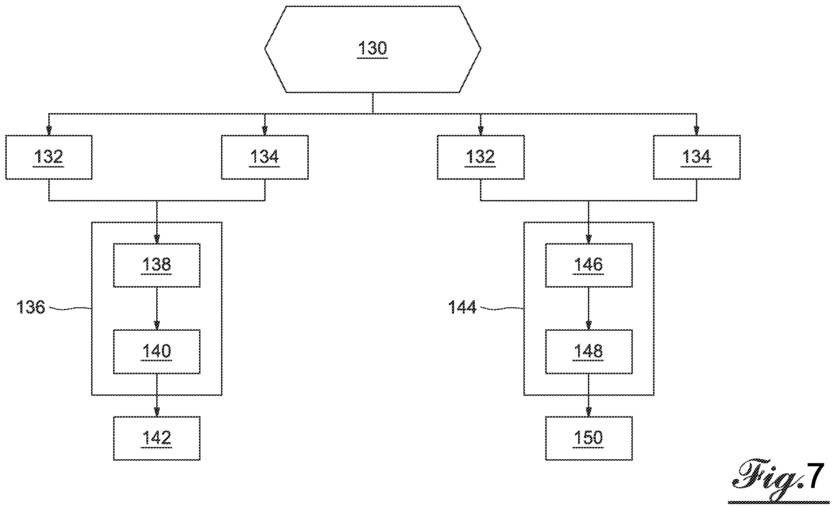

La figure 7 présente une première étape 130 comportant la détermination du rapport de vitesse engagé avec son embrayage fermé, afin de connaître le rapport de vitesse utilisé pour le roulage en cours.

On a ensuite pour la demi-boîte paire 132 ou la demi-boîte impaire 134, des étapes de mise au point 136 de la phase de préparation, réalisées par exemple sur banc d'essai en fin de chaîne de montage du véhicule, et des étapes de roulage 144 qui seront réalisées lors du roulage du véhicule.

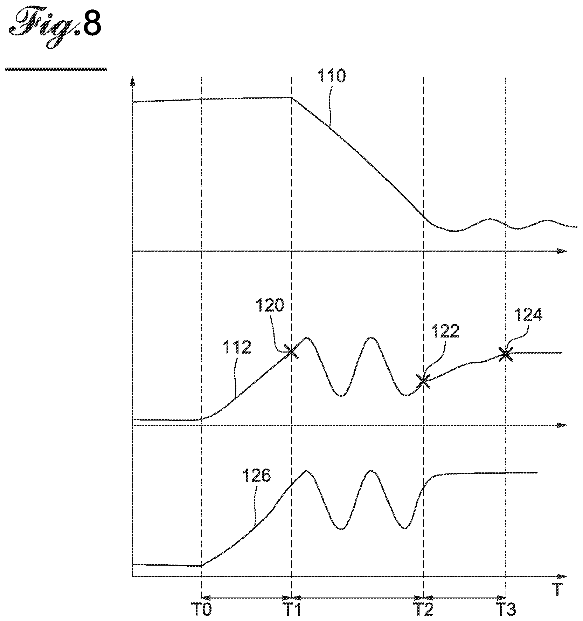

Les étapes de mise au point 136 comportent successivement pour chacun des rapports de vitesse engagés, une première étape 138 comprenant la courbe de consigne de couple moteur 126 comportant par exemple, les paliers 160, ou selon un autre mode de réalisation de l'invention décrit ci-après (en référence à la figure 8), des variations sinusoïdales. En plus de la consigne de couple moteur, on peut aussi ajuster d'autres conditions comme la vitesse de rotation ou la température de la boîte de vitesses.

On peut en particulier répéter cette étape avec des variations sinusoïdales autour de paliers comprenant différents niveaux de couples.

On peut en particulier pour une boîte de vitesses acceptant un couple maximum de 300Nm, passer successivement des paliers de couples d'étalonnage ou des niveaux de valeur de couple d'étalonnage de 20, 50, 100, 150, 200 et 300Nm. En complément on peut aussi appliquer un couple d'étalonnage négatif correspondant à l'utilisation du frein moteur.

Pour chacun de ces paliers ou niveaux, on a une deuxième étape 140 comprenant l'apprentissage des positions des points particuliers 120, 122, 124 du manchon de synchronisation 86, pour des engagements de tous les rapports de la demi-boîte qui est libre. Une troisième étape 142 comporte la mémorisation dans le calculateur 70 de ces positions des points particuliers 120, 122, 124 en fonction du couple transmis, pour former des cartographies.

Les étapes de roulage 144 comportent sur le rapport de vitesse engagé, une première étape 146 comprenant la détermination du couple transmis par l'embrayage, en prenant l'information du couple que le moteur 2 délivre.

On a ensuite une deuxième étape 148 comportant l'utilisation de la cartographie correspondant au rapport engagé et au rapport à engager, pour situer le couple transmis par rapport aux couples d'étalonnage, et en déduire les positions calculées des points particuliers 120, 122, 124 par comparaison avec les positions des points mesurés.

On peut en particulier réaliser une interpolation linéaire sur la courbe des positions mesurées des points particuliers 120, 122, 124 liés aux paliers de couple d'étalonnage 160, pour obtenir les positions calculées des points particuliers correspondant à des couples intermédiaires entre ces paliers.

Dans une troisième étape 150 on réalise enfin un pilotage des manchons de synchronisation 86 en prenant en compte les positions des points particuliers 1230, 122, 124 calculées, qui seront très proches de la réalité et permettront des engagements rapides et sûrs qui évitent des bruits et des usures anormales du matériel.

Le procédé de contrôle selon l'invention nécessitant seulement des compléments de logiciels, peut être réalisé de manière économique.

La figure 8 présente en fonction du temps T lors de l'engagement d'un rapport, les courbes représentant la vitesse 110 de l'arbre primaire, la position 112 de la fourchette 100, et la consigne de couple moteur 126 demandée pendant une phase de préparation du procédé.

Au temps T0 on réalise une avance de la fourchette 100. Le manchon de synchronisation 86 comporte des dents axiales intérieures 92 présentant à chaque extrémité une pointe qui va pousser sur une dent du cône de synchronisation 84, pour appliquer son cône sur un cône correspondant du pignon libre 82. Le déplacement qui est contrôlé en vitesse, s'arrête au temps T1 à la position du premier point particulier 120 mesurée par le capteur 102.

On réalise ensuite le contrôle de l'actionneur 60 en effort pour appliquer une pression ajustée sur les cônes de synchronisation, qui va réaliser l'essorage de l'huile recouvrant ces cônes, puis le freinage de la vitesse du pignon libre 82 par friction sur ces cônes.

Au temps T2 la vitesse du pignon libre 82 est synchronisée avec celle de son arbre secondaire. On obtient la position du deuxième point particulier 122 mesurée par le capteur 102, qui est assez proche de celle du premier point particulier 120.

Le cône de synchronisation 84 ne reçoit alors plus de couple d'entraînement qui s'oppose à l'avance des pointes avant des dents intérieures 92 du manchon de synchronisation 86. Ce cône 84 peut tourner en dégageant ses dents entre les dents intérieures 92 du manchon de synchronisation 86, ce qui permet l'avance de ce manchon.

Après le temps T2 on a l'avance du manchon de synchronisation 86 contrôlée en vitesse, puis l'engagement rapide sur les dents d'engagement 94 qui lie complètement le pignon 82 avec son arbre, se terminant à la position du troisième point particulier 124 mesurée par le capteur 102.

Dans la phase de préparation du procédé réalisée sur banc d'essai en fin de chaîne de montage du véhicule, pour chaque rapport de vitesse engagé d'une demi-boîte ce procédé applique la courbe de consigne de couple moteur 126, et engage pendant cette consigne des rapports de l'autre demi-boîte, en mesurant et en mémorisant les positions de points particuliers 120, 122, 124 des manchons de synchronisation 86 pendant ces engagements.

Pendant l'étape de synchronisation de chaque engagement d'un rapport de vitesse, la consigne de couple moteur 126 comporte autour d'un palier des variations qui sont sensiblement sinusoïdales. L'effort de synchronisation appliqué par l'actionneur 60 sur le manchon de synchronisation 86, est piloté pour rester constant.

On obtient pendant l'étape de synchronisation en réponse une variation sensiblement sinusoïdale de la position 112 de l'actionneur, qui pour appliquer un effort constant doit suivre les variations de géométrie de la boîte de vitesses dues aux flexions des composants données par le couple moteur variable. Il faut en particulier un actionneur disposant d'un temps de réponse assez court pour suivre ces variations.

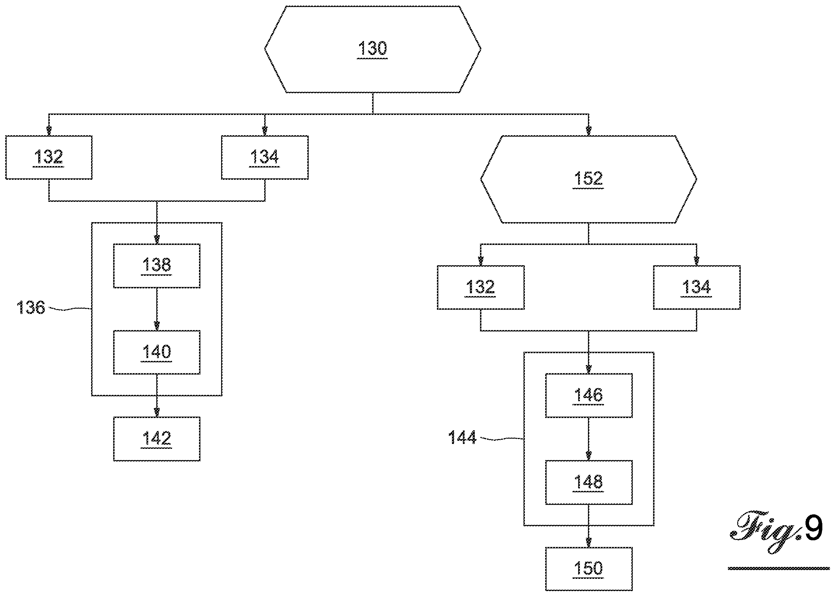

La figure 9 présente la première étape 130 comportant la détermination du rapport de vitesse engagé avec son embrayage fermé, afin de connaître le rapport de vitesse utilisé pour le roulage en cours.

On a ensuite pour la demi-boîte paire 132 ou la demi-boîte impaire 134, les étapes de mise au point 136 réalisées, par exemple, en fin de chaîne de montage du véhicule, et les étapes de roulage 144 qui seront réalisées lors du roulage du véhicule.

Les étapes de mise au point 136 comportent successivement pour chacun des rapports de vitesse engagés, la première étape 138 comprenant la courbe de consigne de couple moteur 126 présentée en figure 6 et figure 8, comportant les paliers 160 reliés par les pentes croissantes. En plus de la consigne de couple moteur 126, on peut aussi ajuster d'autres conditions comme la vitesse de rotation ou la température de la boîte de vitesses.

On peut en particulier pour une boîte de vitesses acceptant un couple maximum de 300Nm, passer successivement des paliers 160 de couples d'étalonnage de 20, 50, 100, 150, 200 et 300Nm.

Pour chacun de ces paliers 160, on a la deuxième étape 140 comprenant l'apprentissage des positions des points particuliers 120, 122, 124 du manchon de synchronisation 86, pour les engagements de tous les rapports de la demi-boîte qui est libre. La troisième étape 142 comporte la mémorisation dans le calculateur 70 de ces positions des points particuliers 120, 122, 124 en fonction du couple transmis, pour former les cartographies.

Pour les phases de roulage on a d'abord une vérification de la demande d'un couple croissant 152, correspondant à une accélération du véhicule demandée par un enfoncement de la pédale d'accélérateur. Dans ce cas, les étapes de roulage 144 comportent sur le rapport de vitesse engagé, la première étape 146 comprenant la détermination du couple transmis par l'embrayage, en prenant l'information du couple que le moteur 2 délivre.

On a ensuite la deuxième étape 148 comportant l'utilisation de la cartographie correspondant au rapport engagé et au rapport à engager, pour situer le couple transmis par rapport aux couples d'étalonnage, et en déduire les positions calculées des points particuliers 120, 122, 124 par comparaison avec les positions des points mesurés.

On peut en particulier réaliser l'interpolation linéaire sur la courbe des positions mesurées des points particuliers 120, 122, 124 liés aux paliers de couple d'étalonnage 160, pour obtenir les positions calculées des points particuliers correspondant à des couples intermédiaires entre ces paliers.

Dans la troisième étape 150 on réalise enfin un pilotage des manchons de synchronisation 86 en prenant en compte les positions des points particuliers 120, 122, 124 calculées, qui seront très proches de la réalité et permettront des engagements rapides et sûrs qui évitent des bruits et des usures anormales du matériel.

## Revendications

1. Procédé de calcul des positions de points particuliers de manchons de synchronisation (86) d'une boîte de vitesses à double embrayage entraînée par un moteur (2) d'un véhicule, cette boîte comportant deux demi-boîtes commandées chacune par un embrayage (4, 8), **caractérisé en ce que**, dans une phase de préparation pour chaque rapport de vitesse engagé d'une demi-boîte, le procédé applique une courbe de consigne de couple moteur prédéterminée et engage, pendant cette consigne, des rapports de l'autre demi-boîte, en mesurant et en mémorisant des positions de points particuliers (120, 122, 124) des manchons de synchronisation (86) pendant ces engagements, et **en ce que** par la suite, lors des phases de roulage du véhicule, le procédé calcule pour les points particuliers (120, 122, 124) des positions prévisionnelles par comparaison avec les positions mémorisées des points particuliers (120, 122, 124) pendant des conditions de roulage similaires.

2. Procédé de calcul selon la revendication 1, **caractérisé en ce que** le procédé engage tous les rapports de l'autre demi-boîte pour effectuer les mesures des positions des points particuliers (120, 122, 124).

3. Procédé de calcul selon la revendication 1 ou 2, **caractérisé en ce que** les points particuliers comportent un premier point (120) correspondant à la position du manchon (86) en début de synchronisation, un deuxième point (122) correspondant à la position du manchon (86) en fin de synchronisation, et un troisième point (124) correspondant à la position du manchon (86) en fin d'engagement du rapport.

4. Procédé de calcul selon l'une quelconque des revendications précédentes, **caractérisé en ce que**, dans la phase de préparation, le procédé applique aussi pendant la consigne, des conditions de vitesse d'entraînement de la boîte de vitesses, et des conditions de température.

5. Procédé de calcul selon l'une quelconque des revendications précédentes, **caractérisé en ce que** la courbe de consigne de couple moteur prédéterminée pour chaque rapport engagé comporte plusieurs niveaux de valeurs échelonnés.

6. Procédé de calcul selon la revendication 5, **caractérisé en ce que** les niveaux de valeurs sont au nombre d'au moins quatre allant jusqu'au couple maximum admissible par la boîte de vitesses.

7. Procédé de calcul selon l'une quelconque des revendications précédentes, **caractérisé en ce que** la courbe de consigne de couple moteur prédéterminée comprend différents paliers de couples fixes.

8. Procédé de calcul selon la revendication 7, **caractérisé en ce que** les paliers sont reliés entre eux par des pentes de couple toujours croissantes.

9. Procédé de calcul selon la revendication 8, **caractérisé en ce que**, à la suite de l'étape d'engagement, lors des phases de roulage du véhicule, s'il détecte une demande de couple croissante (152), il calcule pour les points particuliers (120, 122, 124) les positions prévisionnelles par comparaison avec les positions mémorisées des points particuliers (120, 122, 124).

10. Procédé de calcul selon l'une des revendications 1 à 6, **caractérisé en ce qu'**une étape de synchronisation de chaque engagement comprend des variations de la consigne de couple moteur avec un effort de synchronisation piloté pour rester constant.

11. Procédé de calcul selon la revendication 10 et la revendication 3, **caractérisé en ce qu'**avant le premier point particulier (120) et après le deuxième point particulier (122), la courbe de consigne de couple moteur (126) est croissante.

12. Procédé de calcul selon la revendication 11 et la revendication 3, **caractérisé en ce qu'**entre le premier point particulier (120) et le deuxième point particulier (122), la courbe de consigne de couple moteur (126) est sinusoïdale.

13. Procédé de calcul selon l'une quelconque des revendications 10 à 12 et en combinaison avec la revendication 5 ou 6, **caractérisé en ce que**, pour un même engagement, la courbe de consigne de couple moteur (126) comportant les variations est répétée avec des variations de consigne autour des niveaux de valeurs échelonnés.

14. Véhicule automobile équipé d'une boîte de vitesses à double embrayage comprenant des manchons de synchronisation, **caractérisé en ce qu'**il comporte des moyens mettant en œuvre un procédé de calcul des positions de points particuliers (120, 122, 124) de ces manchons (86) selon l'une quelconque des revendications précédentes.

## Patentansprüche

1. Verfahren zum Berechnen der Positionen bestimmter Punkte von Synchronisationshülsen (86) eines Doppelkupplungsgetriebes, das von einem Motor (2) eines Fahrzeugs angetrieben wird, wobei dieses Getriebe zwei Halbkästen umfasst, die jeweils von einer Kupplung (4) gesteuert werden , 8), **dadurch gekennzeichnet, dass** in einer Vorbereitungsphase für jedes Übersetzungsverhältnis eines Halbgetriebes das Verfahren eine vorgegebene Motordrehmoment-Sollwertkurve anwendet und während dieses Sollwerts Gänge des eine weitere Halbbox durch Messen und Speichern der Positionen bestimmter Punkte (120, 122, 124) der Synchronisationshülsen (86) während dieser Eingriffe und in der Folge während der Fahrphasen des Fahrzeugs die Das Verfahren berechnet für die bestimmten Punkte (120, 122, 124) vorhergesagte Positionen durch Vergleich mit den gespeicherten Positionen der bestimmten Punkte (120, 122, 124) unter ähnlichen Fahrbedingungen.

2. Berechnungsverfahren nach Anspruch 1, **dadurch gekennzeichnet, dass** das Verfahren alle Berichte der anderen Halbbox einbezieht, um die Messungen der Positionen der bestimmten Punkte (120, 122, 124) durchzuführen.

3. Berechnungsverfahren nach Anspruch 1 oder 2, **dadurch gekennzeichnet, dass** die bestimmten Punkte einen ersten Punkt (120) umfassen, der der Position der Hülse (86) zu Beginn der Synchronisation entspricht, einen zweiten Punkt (122), der der Position der Hülse entspricht (86) am Ende der Synchronisation und ein dritter Punkt (124), der der Position der Hülse (86) am Ende des Eingriffs des Berichts entspricht.

4. Berechnungsverfahren nach einem der vorhergehenden Ansprüche, **dadurch gekennzeichnet, dass** in der Vorbereitungsphase das Verfahren auch unter den Bedingungen Sollwert, Getriebeantriebsgeschwindigkeit und Temperatur angewendet wird.

5. Berechnungsverfahren nach einem der vorhergehenden Ansprüche, das **dadurch gekennzeichnet ist, dass** die für jeden eingelegten Gang vorgegebene Motordrehmomentsollwertkurve mehrere Stufen skalierter Werte umfasst.

6. Berechnungsverfahren nach Anspruch 5, **dadurch gekennzeichnet, dass** die Werte mindestens vier bis zu dem vom Getriebe maximal zulässigen Drehmoment betragen.

7. Berechnungsverfahren nach einem der vorhergehenden Ansprüche, **gekennzeichnet dadurch, dass** die vorbestimmte Motordrehmomentsollwertkurve verschiedene feste Drehmomentstufen umfasst.

8. Berechnungsverfahren nach Anspruch 7, **dadurch gekennzeichnet, dass** die Lager durch immer größere Drehmomentsteigungen miteinander verbunden sind.

9. Berechnungsverfahren nach Anspruch 8, **dadurch gekennzeichnet, dass** nach dem Einrückschritt während der Fahrzeuglaufphasen, wenn es einen steigenden Drehmomentbedarf (152) feststellt, die Punkte berechnet werden insbesondere (120, 122, 124) die prognostizierten Positionen durch Vergleich mit den gespeicherten Positionen der bestimmten Punkte (120, 122, 124).

10. Berechnungsverfahren nach einem der Ansprüche 1 bis 6, **gekennzeichnet dadurch, dass** ein Synchronisationsschritt jedes Eingriffs Variationen des Motordrehmomentsollwerts mit einem kontrollierten Synchronisationsaufwand umfasst, um konstant zu bleiben.

11. Berechnungsverfahren nach Anspruch 10 und Anspruch 3, **dadurch gekennzeichnet, dass** vor dem ersten bestimmten Punkt (120) und nach dem zweiten bestimmten Punkt (122) die Motordrehmoment-Sollwertkurve (126) zunimmt.

12. Berechnungsverfahren nach Anspruch 11 und Anspruch 3, **dadurch gekennzeichnet, dass** zwischen dem ersten bestimmten Punkt (120) und dem zweiten bestimmten Punkt (122) die Motordrehmoment-Sollwertkurve (126) sinusförmig ist.

13. Berechnungsverfahren nach einem der Ansprüche 10 bis 12 und in Kombination mit Anspruch 5 oder 6, **gekennzeichnet dadurch, dass** bei gleichem Eingriff die Motordrehmoment-Sollwertkurve (126), die die Variationen umfasst, mit wiederholt wird Sollwertschwankungen um skalierte Werte.

14. Kraftfahrzeug, das mit einem Doppelkupplungsgetriebe mit Synchronisationshülsen ausgestattet ist, das **dadurch gekennzeichnet ist, dass** es Mittel umfasst, die ein Verfahren zum Berechnen der Positionen bestimmter Punkte (120, 122, 124) dieser Hülsen (86) gemäß einem der vorhergehenden Ansprüche.

## Claims

1. Method for calculating the positions of particular points of synchronization sleeves (86) of a double-clutch gearbox driven by an engine (2) of a vehicle, this box comprising two half-boxes each controlled by a clutch (4 , 8), **characterized in that**, in a preparation phase for each gear ratio engaged of a half-gearbox, the method applies a predetermined engine torque setpoint curve and engages, during this setpoint, gears of the another half-box, by measuring and memorizing the positions of particular points (120, 122, 124) of the synchronization sleeves (86) during these engagements, and **in that** subsequently, during the driving phases of the vehicle, the method calculates for the particular points (120, 122, 124) predicted positions by comparison with the stored positions of the particular points (120, 122, 124) during similar driving conditions.

2. Calculation method according to claim 1, **characterized in that** the method engages all the gear ratio of the other half-box to perform the measurements of the positions of the particular points (120, 122, 124).

3. Calculation method according to claim 1 or 2, **characterized in that** the particular points include a first point (120) corresponding to the position of the sleeve (86) at the start of synchronization, a second point (122) corresponding to the position of the sleeve (86) at the end of synchronization, and a third point (124) corresponding to the position of the sleeve (86) at the end of engagement of the report.

4. Calculation method according to any one of the preceding claims, **characterized in that**, in the preparation phase, the method also applies, during the setpoint, conditions for the gearbox drive speed, and conditions for temperature.

5. Method of calculation according to any one of the preceding claims, **characterized in that** the predetermined engine torque setpoint curve for each gear engaged comprises several levels of staggered values.

6. Calculation method according to claim 5, **characterized in that** the levels of values are at least four in number going up to the maximum torque admissible by the gearbox.

7. Calculation method according to any one of the preceding claims, **characterized in that** the predetermined engine torque setpoint curve comprises different fixed torque levels.

8. Calculation method according to claim 7, **characterized in that** fixed torque levels are interconnected by ever increasing torque slopes.

9. Calculation method according to claim 8, **characterized in that**, following the engagement step, during the driving phases of the vehicle, if it detects an increasing torque demand (152), it calculates for the particular points (120, 122, 124) the forecast positions by comparison with the stored positions of the particular points (120, 122, 124).

10. Calculation method according to one of claims 1 to 6, **characterized in that** a synchronization step of each engagement comprises variations of the engine torque setpoint with a controlled synchronization force to remain constant.

11. Calculation method according to claim 10 and claim 3, **characterized in that** before the first particular point (120) and after the second particular point (122), the engine torque setpoint curve (126) is increasing.

12. Calculation method according to claim 11 and claim 3, **characterized in that** between the first particular point (120) and the second particular point (122), the engine torque setpoint curve (126) is sinusoidal.

13. Calculation method according to any one of claims 10 to 12 and in combination with claim 5 or 6, **characterized in that**, for the same engagement, the engine torque setpoint curve (126) including the variations is repeated with setpoint variations around the scaled value levels.

14. Motor vehicle equipped with a double clutch gearbox comprising synchronization sleeves, **characterized in that** it comprises means implementing a method for calculating the positions of particular points (120, 122, 124) of these sleeves (86) according to any one of the preceding claims.
